# EUROPEAN PATENT APPLICATION

(11) **EP 3 760 786 A1**
(43) Date of publication of application: **06.01.2021**
(21) Application number: 20183400.9
(22) Date of filing: 01.07.2020
(51) Int. Cl.: D06N 7/00, A47G 27/04, B32B 5/02, B60N 3/04

(54) **AUTOMOTIVE CARPET FLOORING SYSTEM WITH LOOSE TOP LAYER**

(30) Priority: 01.07.2019 EP 19183615
(71) Applicant: Autoneum Management AG, 8406 Winterthur (CH)
(72) Inventor: Druon, Vincent, 78630 MORAINVILLIERS (FR)

(57) **Abstract**

Carpet system consisting of a part A consisting of a carpet top layer comprising of at least a carpet layer and an backing layer attached to the back surface of the carpet layer, and a part B consisting of a fibrous cushioning layer, whereby part A and B are loosely placed on top of each other, whereby the outer surface of the backing layer is touching a surface of the fibrous cushioning layer, and whereby the surface of the backing layer touching the surface of the cushioning layer is imprinted with a grain pattern with rough edges such that the surface smoothness of the backing layer is broken up.

## Description

### Summary of invention

The invention is directed to an automotive carpet system and a method for producing such a system.

It is known to use a flooring system in a passenger vehicle comprising a carpet top layer (Part A) placed loosely on top of a fibrous cushioning layer (Part B). Depending on the system requirements the tufted or needle-punch carpet may have a backing layer to further enhance the abrasion resistance of the carpet surface layer, to increase puncture resistance and or to obtain a water impervious layer between the carpet surface layer and the decoupling (or cushioning) layer. For this backing layer a resin layer or a film layer may be used.

Due to application process of the backing layer to the carpet surface layer and or due to the choice of material, the back surface of the backing layer is "ironed", leaving a very smooth surface.

The flooring system as described has the advantage of an economical low cost solution that is easy to place in a vehicle during assembly, however it is showing some problems in the use. The main problem is that the backing layer in the form of a resin layer or film layer is smooth and therefore the carpet may have the risk of sliding over the cushioning layer. In addition, slight movements of the top layer on the cushioning layer might cause squeaky noises. Both problems alone or in combination might cause a distraction or even a dangerous situation for the driver of the car.

It is therefore the object of the current situation to solve the problem and to provide for an economical solution minimising the potential risks of sliding and noise generation.

### Description of embodiments

This object is achieved by a carpet system according to the main claim and by a method of producing such a system. In particularly by a carpet system consisting of part A consisting of a carpet top layer comprising of at least a carpet layer and an impervious backing layer attached to the back surface of the carpet layer, and a part B consisting of a fibrous cushioning layer, whereby part A and B are loosely placed on top of each other, whereby the outer surface of the backing layer is touching a surface of the fibrous cushioning layer, whereby the surface of the backing layer is imprinted with a grain pattern with rough edges such that the surface smoothness is broken.

Part A is placed loosely on top of part B at assembly in the car and during use. Loosely is used in the sense of without a substantial surface lamination between the two surfaces of the parts touching each other, in particularly not by a chemical binding or adhesive layer. The parts might be connected at corners or locally with clips.

Surprisingly, imprinting the back surface of the backing layer with an irregular grain pattern with rough edges, breaks up the skin of the backing layer forming an irregular surface. This irregular imprinted surface is less able to slide over the underlying surface of part B.

In particularly, if part B is a consolidated fibrous material the roughness of the irregular imprinted surface will hook behind the fibres of the surface of part B increasing the surface friction between the two layers. Hence reducing or even preventing the sliding of the top layer during use.

Preferably, the imprint of the surface of the backing layer is mimicking an imprint of a grinding or sanding paper surface with rough grinding particles.

Surprisingly, unregular particle size and shape of grinding particles induce an imprint of the surface, that is not smooth and that might even produce micro-cracks in the skin of the surface of the backing layer during the moulding step.

The imprint can be made with either an inlay of grinding paper in the mould before moulding part A in its final 3D shape or by creating a surface in the mould that mimics the pattern of a grinding paper surface. For instance, by laser cutting or sand blasting the surface into the correct surface structure or by using an insert with such a pattern on the surface.

Grinding paper will give rise to an irregular pattern, in case a surface mimicking the grinding paper is used, an irregular pattern is preferred.

The carpet layer is preferably one of a needle punch, dilour, velour or tufted pile layer. The pile layer can be made of staple fibres, yarn, like BCF yarn, or endless filaments as known in the art.

In case the carpet layer is a needle punch carpet, preferably a dilour or velour type pile layer, it can be made of staple fibers, preferably from solid fibers, hollow fibers or a mixture thereof. Preferably up to 30% of the initial fibers used in the needle punch carpet pile are bicomponent or binder fibers, binding the fiber mixture together upon heating the layer.

The pile layer, needle punched or tufted, is preferably made of thermoplastic fibrous material, preferably made of polyester, like polyethylene terephthalate (PET), polybutylene terephthalate (PBT) or polytrimethylene terephthalate (PTT), polyolefin, like polypropylene, or Polyamide, like PA6 or PA66, or Poly Lactic acid (PLA) or a mixture thereof.

The backing layer is preferably made of a thermoset or thermoplastic resin material, the backing layer comprises EVA, polyester, polyolefin, such as polyethylene (PE), low-linear density polyethylene (LDPE) or linear low-density polyethylene (LLDPE), or copolymers of PE or a latex layer.

Alternatively, a backing based on multilayers might be used for instance a combination of a latex layer and a resin layer, or a multilayer foil material for instance a polyethylene/polyamide/polyethylene foil might be used.

The backing layer is preferably one of a resin layer or laminated foil layer eventually combined with a latex layer.

The resin layer might be extruded first and applied as a sheet or might be back extruded directly to the surface of the layer. Alternatively, the resin layer is applied directly to the surface of the layer using an application roller.

Although it might be possible to imprint the foil or resin layer before application to the back of the pile layer, this is less preferred if the subsequent moulding of the A part might "iron" out or smoothen the effect again.

Preferably the backing layer is impervious.

Preferably the backing layer is further comprising a filler, preferably up to 85% by weight. The inert filler is preferably one of Barium Sulphate (BaSO4) or Calcium Carbonate (CaCO3).

The carpet system further comprises a part B formed by a cushioning layer of either foam or felt material.

The foam is preferably one of an open cell or closed cell foam. Preferably an open cell foam without a skin layer.

The felt or fibrous cushioning layer comprises at least one of polyamide fibers, polyester fibers, natural fibers like cotton or hemp, polyolefin fibers or a mixture thereof. The fibrous cushioning layer further comprises binder, preferably binder fibers.

The foam, felt or fibrous cushioning layer might further comprise at least one of foam flocks or recycled particulate.

Alternatively, the cushioning layer is made from foam scrap particles bound together to form a layer.

The cushioning layer might further comprise additional layers, like scrims.

In alternative embodiment Part A with the layers as disclosed is formed in an automotive mat and Part B is a standard carpet flooring module with a carpet top layer, a backing layer and a cushioning layer. Whereby Part A is having an imprint on the backing layer that is touching the carpet layer during use.

### Method of producing the carpet system according to the invention.

Part A and part B are produced separately and during placement in a car part A is placed on top of part B, such that the carpet surface is facing the interior compartment of the car.

Part A is preferably made of a carpet as known in the art, preferably a needle punch nonwoven carpet or a tufted carpet layer.

For instance, a needle punch nonwoven carpet obtained by a carded cross lapped mat of staple fibres, needle punched in consecutive steps, either from both sides alternating or from one side only. In the consecutive steps the needles can be adjusted to obtain a consolidated layer - hence the fibres cannot easily be pulled out of the layer. As a final needling step the needles can be changed to obtain a surface pattern and or softening as known in the art, like for instance a velvet, dilour or velour type of surface.

Alternatively, the carpet top layer is a tufted carpet layer according to the state of the art with a BCF yarn tufted in a fabric or nonwoven layer, the carpet surface can be preferably a closed loop, open loop or twisted type of tufted pile, the tufts might be placed in the backing fabric with a staggered pattern. The backside of the tufted layer not forming the surface pile layer, is covered with at least one additional backing layer for locking the fibers within the tuft, as well as the tufts in place. While the lower surface of the backing layer or layers is the surface that will be in touch with the top surface layer of the fibrous cushioning layer.

The thus made needled or tufted layer obtains a backing layer for enhancing the abrasion performance and eventually to stiffen the layer further. Preferably the layer is extruded on the back of the carpet when still on the roller. Preferably the carpet is cut into shape or in blanks.

The backing layer is preferably between 100 and 500 g/m², preferably between 150 and 300 g/m².

Preferably part B is made of a felt or foam decoupler, this can be standard mats of shoddy cotton or other types of shoddy or alternatively slab foam, or it can be pre-formed, for instance with fiber injection technologies or in-mould foaming process, or it can be pre-moulded fibrous mats or foam slabs.

The felt decoupler can be made of recycled and or reclaimed and or virgin material. Preferably, it comprises fibres of at least one of the following materials: polyester, polyolefin, like polyethylene, natural, like cotton, hemp or flask, or mixtures thereof.

The decoupler can be formed, for instance by moulding, fiber injection technologies or other known methods. It can be used in the form of a mat or 3D formed shape. Preferably the surface of the fibrous decoupler in contact with the backing layer of the carpet is not fully plasticised such that the fiber structure on the surface is enhancing the anti-sliding effect.

The carpet top layer including the backing layer forming part A are thermally moulded in the required 3D shape in a two-part mould. The mould that comes in contact with the backing layer surface of the carpet blank, is either covered with sanding paper or obtains a surface mimicking sanding paper.

Surprisingly it was found that a mould surface covered with sanding paper or having a surface mimicking sanding paper is rough enough to break the surface of the backing layer such that it becomes rough. The thermal process softens the backing layer which is therefore imprinted with the rough surface of the moulding surface. The surface of the backing layer is imprinted with the irregular grain pattern of the grinding paper, or a grinding paper like surface with rough edges such that the surface smoothness of the backing layer is broken up. The imprint might even induce small micro-cracks in the surface.

Surprisingly, the roughening of the surface by the imprint is enough to obtain an increase in the surface friction, reducing or even preventing the sliding of part A on Part B during use.

The mould surface with the grained patterns might be achieved by either attaching grinding or sanding paper at least locally at the surface of the mould, milling or treating the surface of the tool to get the grained surface at least locally, or placing a local plate or insert with the grain surface pattern in the tool. Depending on the fouling of the grained pattern, a solution that can be taken out and cleaned might be preferable.

### Figures

Figure 1: cross section of a carpet system according to the invention.
Figure 2: cross section of a carpet system according to the invention.
Figure 3 cross section of the mould surface for imprinting the surface of the backing layer according to the invention.
Figure 4 cross section of a possible layout for a surface for imprinting the surface of the backing layer according to the invention.
Figure 5 schematic drawing of the mould with example placements of the inserts or the grinding paper patches.

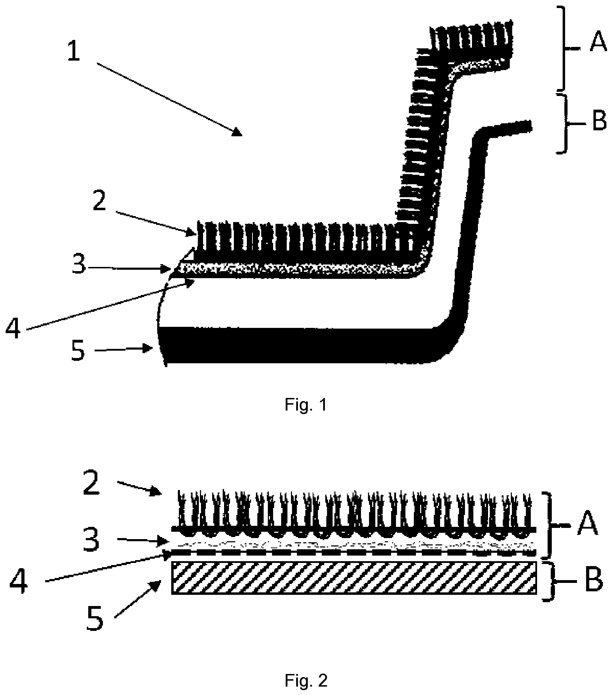

Figure 1 is showing a part of a carpet system (1) consisting of a Part A (A) comprising a carpet layer (2), for example a needle punch dilour layer, and a backing layer (3) attached to the back surface of the carpet layer and a Part B (B) comprising of at least a cushioning layer (5). Reference 4 is pointing to the surface treated according to the invention.

Figure 2 shows a similar layout as figure 1 consisting of a Part A (A) comprising a carpet layer (2), for example a tufted carpet, tufted in a primary backing layer, and a second backing layer (3) attached to the back surface of the carpet layer, and a Part B (B) comprising of at least a cushioning layer (5). The imprinted surface is shown schematically with the line 4. The imprint is preferably irregular in shape and size with sharp edges as well as preferably random distributed over the surface to increase the friction between part A and part B during use.

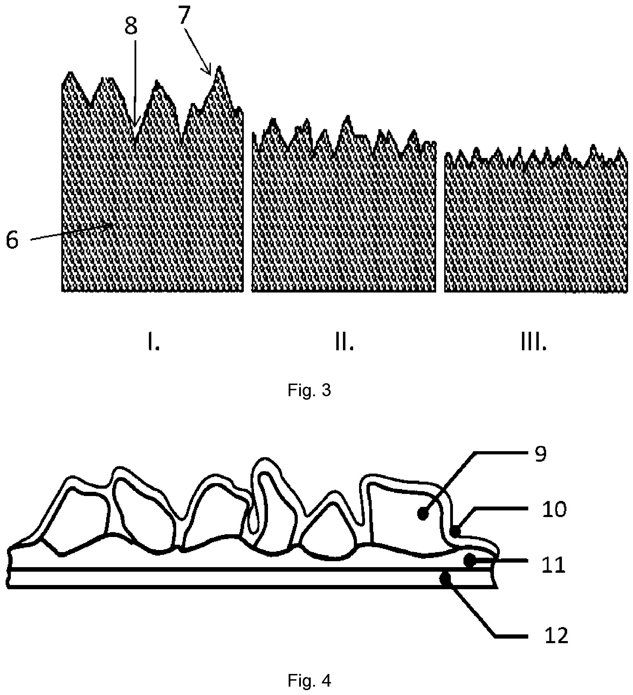

Figure 3 is showing the cross section of the mould surface according to the invention mimicking different grades of sanding paper. Figure 3 I. is a 80 grit, figure 3 II. is a 100 grit and figure 3 III. is a 120 grit (grit size according to the ISO 6344 standard). The higher the grit size the smaller or finer the particle size on the surface. Depending on the material of the backing layer as well as the effect necessary a lower grit size will increase the scratched surface and hence enhance the friction between the surfaces.

Preferably the surface has a texture that mimics a sandpaper surface with a grit size between 20 and 120, preferably between 20 and 80, preferably a grit size of 36. This means the surface has a random pattern of sharp edged so-called particles, with an average particle diameter of between 764(µm) for 20 grid and 201(µm) for 80 grid. Whereby the particle size is to be measured parallel to the surface of the mould.

The Grit size refers to the size of the particles of abrading materials embedded in the sandpaper. Several standards have been established for grit size. The grit size is used here to obtain a measure of the quasi sharp surface particles, that are forming the surface. They might be true particles or a surface mimicking such a type of surface.

Preferably the surface will have a large number of cutting points in the form of sharp 3 D tooth, see for example figure 3. Preferably the grains pattern imprinted is irregular and random, further increasing the surface structure of the imprinted pattern on the surface of the backing layer.

In a first embodiment the mould surface for the imprinting of the backing layer can be covered at least partially with grinding or sanding paper as shown in figure 4. Preferably a grinding paper type is used that consist of a water resistant carrier layer (12), a temperature stabile glue layer (11) and a particle type that is able to withstand temperature and water (9). For instance, a mineral, metal like aluminium or natural type of abrasive particles. If necessary a heat resistant coating (10) can be used to prevent the grains from coming off, and or to increase the abrasion resistant of the surface.

Alternatively, the particle surface can be put directly on the mould surface hence the carrier layer (12) is than the mould surface, including all the other features.

Alternatively, the surface can be treated for instance by grinding, sand blasting, laser cutting or etching, to mimic a grinding paper surface. For example, sand blasting the surface with sand of around 200µm will give an equivalent result. The effect can be adapted by the size of sand particles used to blast, preferably between 150 and 250µm, the larger the particles the more profound the surface scratches on the insert or tool surface.

Preferably aluminium inserts are sandblasted and placed in the mould at the areas, where the product benefits from the treatment.

The full surface of the mould in contact with the backing layer may be imprinted or only local imprints might be made, for instance in the area of the feet, where the pressure to slide is the highest.

Alternatively, the moulding surface for the imprint is made on a removable plate that can be put against or flush with the moulding surface in contact with a surface of the backing layer.

As can be seen in figure 3, a surface imprinted with such a grinding paper structure obtains a random structure of hills formed by the valleys of the pattern (8) and valleys with mainly sharp edges formed by the sharp tooth of the particles (7). The combination of which ensures a pattern imprinting on the surface of the backing layer, roughening the surface and opening the skin of the surface in a random fashion. The sharp edges increasing the grip of the surface of the backing layer on the underlying layer during use.

The mould surface with the particle surface pattern will imprint the softened backing layer of part A and thereby create a negative imprint of the mould surface. While the sharp edges will more likely create small scratch like features in the imprint. Surprisingly this works good as antiskid surface against a fibrous cushioning layer, even if this layer is consolidated during thermal moulding. The small sharp imprint of the surface is causing enough impurities on the surface that the fibres of the underlying cushioning layer can hook too, preventing sliding of the top carpet layer.

Due to the nature of the imprint the thickness of the backing layer surface that is imprinted will be minimal, preferably not more than 5 mm in depth, hence the full function of the backing layer remains unchanged.

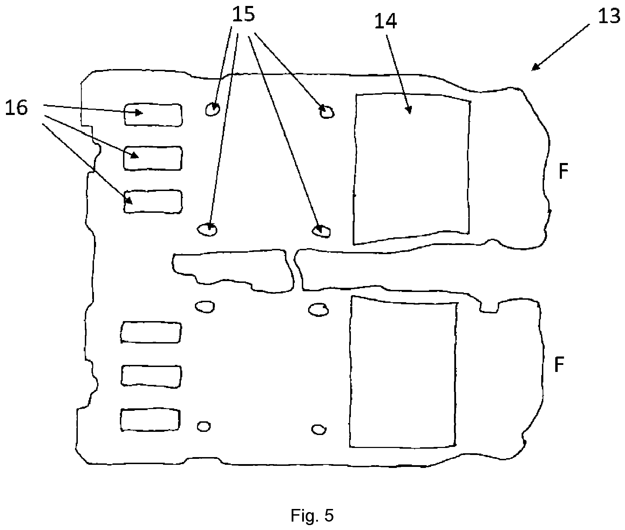

Figure 5 shows a drawing of the layout for a mould (13) including the inserts according to the invention. A typical mould for an interior trim part in this case the flooring module is built of two mould halves. The mould half (13) shown is for moulding the surface of the backing layer directed to Part B. The A part comprises contain cut outs (15) to enable fixation of the chairs to the body-in-white -the car main structure-. F indicates the front of the car. On either site larger (14) and smaller inserts (16) are planned for optimising the B surface of the part moulded in the tool. Preferably the size of the insert is related to the amount of horizontal force expected. This will be more in the foot well area of the front passenger seats, in particularly at the driver site, showing the larger insert 14. The inserts 16 and or 14 can either be mounted on top of the normal mould surface; hence the material will locally be slightly more compressed, or can be placed and mounted in recesses to ensure the original thickness as planned.

## Claims

1. Carpet system consisting of
a part A consisting of a carpet top layer comprising of at least a carpet layer and an backing layer attached to the back surface of the carpet layer, and
a part B consisting of a cushioning layer,
whereby part A and B are loosely placed on top of each other, whereby the outer surface of the backing layer is touching a surface of the fibrous cushioning layer,
**characterised in that** the surface of the backing layer touching the surface of the cushioning layer is imprinted at least partially with a grain pattern with rough edges such that the surface smoothness of the backing layer is broken up.

2. Carpet system according to claim 1, whereby the backing layer is one of a thermoplastic or thermoset layer.

3. Carpet system according to claim 1 or 2, whereby the backing layer comprises EVA, polyester, polyolefin, such as polyethylene (PE), low-linear density polyethylene (LDPE) or linear low-density polyethylene (LLDPE), or copolymers of PE and/or a latex layer.

4. Carpet system according to one of the preceding claims whereby the cushioning layer is either a foam layer or a fibrous layer.

5. Carpet system according to one of the preceding claims, whereby the cushioning layer is a fibrous layer comprising at least one of polyamide fibers, polyester fibers, natural fibers like cotton or hemp, polyolefin fibers or a mixture thereof.

6. Carpet system according to one of the preceding claims, whereby the the cushioning layer further comprises at least one of foam flocks or recycled particulate.

7. Carpet system according to one of the preceding claims whereby the fibrous cushioning layer further comprises binder, preferably binder fibers.

8. Carpet system according to one of the preceding claims whereby the carpet layer is one of a tufted, dilour or needle punched carpet.

9. Carpet system according to one of the preceding claims whereby the imprint in the surface of the backing layer is a negative imprint of sharp particles as used in grinding paper or a surface mimicking sharp particles.

10. Method of producing a carpet system according to one of the preceding claims with the steps of
- producing a part A by adding a backing layer to a carpet layer either by extruding, laminating or applying the backing layer to the carpet layer;
- heating at least the surface of the backing layer and imprinting at least partially a grained pattern on at least part of the heated surface, and preferably at the same time moulding part A in the desired 3D shape.

11. Method according to claim 9 with the additional step of producing a part B by either moulding or forming a fibrous or foam layer into the cushioning layer.

12. Use of a carpet system according to one of the previous claims with a part A and a part B, whereby part B is placed on the body of a car in the passenger compartment and part A is placed loosely on top of part B as a carpet system in a vehicle like a petrol, diesel, hybrid or electric passenger vehicle.
